# FASCICULE DE BREVET EUROPEEN

(11) **EP 4 387 163 B1**
(45) Date de publication et mention de la délivrance du brevet: **07.10.2026**
(21) Numéro de dépôt: 23211249.0
(22) Date de dépôt: 21.11.2023
(51) Int. Cl.: H04L 9/32

(54) **PROCÉDÉ DE GESTION POUR LES RENOUVELLEMENTS DE CERTIFICATS D AUTHENTIFICATION DE COMPOSANTS CONNECTÉS**
VERWALTUNGSVERFAHREN FÜR DIE ERNEUERUNG VON AUTHENTIFIZIERUNGSZERTIFIKATEN VERBUNDENER KOMPONENTEN
MANAGEMENT METHOD FOR RENEWING AUTHENTICATION CERTIFICATES OF CONNECTED COMPONENTS

(30) Priorité: 12.12.2022 FR 2213188
(43) Date de publication de la demande: 19.06.2024
(73) Titulaire: Manitowoc Crane Group France, 69570 Dardilly (FR)
(72) Inventeur: LARMONIER, Nicolas, 69003 LYON (FR)
(74) Mandataire: Germain Maureau

(56) Documents cités:
- US-A1- 2011 113 239
- US-A1- 2018 034 646

## Description

### [Domaine technique]

L'invention se rapporte à un procédé de gestion pour le renouvellement de certificats d'authentification de composants connectés.

Elle se rapporte plus particulièrement à un procédé de gestion permettant de renouveler un certificat d'authentification d'un composant connecté lorsque ledit certificat d'authentification a dépassé sa date de validité.

L'invention trouve une application favorite dans le renouvellement des certificats d'authentification de composants connectés d'un engin de chantier, par exemple une grue, mais peut être étendue à tout système disposant d'un certificat d'authentification utilisé dans le cadre d'un contexte applicatif donné.

### [Etat de la technique]

Par définition, un certificat d'authentification est comparable à une attestation ou carte d'identité utilisée par une entité (pouvant être une personne ou un système) pour s'identifier auprès d'un serveur informatique en vue d'accéder aux données et/ou aux applications que contient ledit serveur informatique, de télécharger des mises à jour, etc. Le certificat d'authentification est donc un moyen de sécurité pour empêcher une entité non autorisée d'accéder au contenu du serveur, cette entité pouvant être potentiellement malveillante (par exemple, en étant désireuse de voler les données contenues dans le serveur).

Les certificats délivrés aux entités possèdent une période de validité qui dure généralement un an. C'est pourquoi l'entité, dans le cas où elle souhaite continuer à bénéficier des services proposés par le système informatique pour lequel est requis le certificat d'authentification, doit faire renouveler son certificat d'authentification au cours d'une période de renouvellement comprise dans la période de validité (par exemple, si le certificat d'authentification est valide durant un an, le douzième mois). Si renouvelé, le certificat est alors à nouveau valide pour une nouvelle période de validité. Le renouvellement peut être effectué soit par l'instance ayant généré puis délivré le certificat d'authentification à l'entité, soit par une instance différente.

Dans le contexte applicatif des chantiers de construction, des certificats d'authentification peuvent être attribués aux composants connectés d'un engin de chantier, par exemple une grue, en vue qu'ils se connectent à une infrastructure informatique distante, par exemple un serveur distant gestionnaire de mises à jour pour télécharger des mises à jour relatives à leur fonctionnement.

Cependant, après avoir été utilisée sur un chantier, une grue (ou de manière générale un engin de chantier) peut rester stockée et non alimentée pendant plusieurs mois, de sorte que ses composants connectés ne sont plus en mesure de se connecter. Aussi, lorsqu'elle est à nouveau exploitée et alimentée, les certificats d'authentification des composants connectés peuvent éventuellement être arrivés à expiration, faisant qu'à leur redémarrage et s'ils tentent de se connecter à l'infrastructure informatique distante pour se mettre à jour, l'accès aux mises à jour leur est refusée par l'infrastructure informatique distante.

Le document US 2011/113239 divulgue un procédé pour le renouvellement de certificats d'authentification de composants, que leur date limite de renouvellement ait été dépassée ou non. Le procédé est mis en œuvre par un gestionnaire de certificats comprenant des infrastructures distantes conformées pour : générer et attribuer des certificats d'authentification aux composants ; vérifier si, lorsqu'une demande de renouvellement d'un certificat est émise, la date d'expiration dudit certificat n'est pas dépassée ; renouveller les certifcats d'authentification encore valides ou expirés. De telles infrastructures distantes présentent l'incovénient d'être vulnérables aux attaques externes et aux tentatives d'intrusion, impliquant un potentiel risque de récupération de données dites sensibles, relatives aux certificats d'authentification ou aux composants qui leur sont associées, par des entités malveillantes.

### [Résumé de l'invention]

L'invention se propose de résoudre un tel problème, en apportant une solution qui permet de renouveler un certificat d'authentification expiré, suite à une déconnexion temporaire, tout en maintenant un haut niveau de sécurité.

L'invention se rapporte à un procédé pour une gestion d'un renouvellement d'un certificat d'authentification attribué de manière unique à un composant connecté, dans lequel ledit certificat d'authentification est valide pendant une période de validité jusqu'à une date d'expiration et est expiré au-delà de la date d'expiration, ledit certificat d'authentification servant comme moyen d'authentification du composant connecté auprès d'un serveur distant gestionnaire de mises à jour tant que ledit certificat d'authentification est valide, le procédé mettant en œuvre une phase de renouvellement comprenant au moins les étapes successives suivantes :
- une étape de connexion à distance au cours de laquelle le composant connecté se connecte à un serveur distant de renouvellement de certificat pour une nouvelle période de validité,
- une étape de demande de renouvellement au cours de laquelle le composant connecté émet une demande de renouvellement de certification au serveur distant de renouvellement de certificat,
- une étape de vérification au cours de laquelle le serveur distant de renouvellement de certificat vérifie si le certificat d'authentification est valide ou expiré ;

et dans laquelle si le certificat d'authentification est valide à l'étape de vérification, alors le serveur distant de renouvellement de certificat renouvelle automatiquement le certificat d'authentification pour une nouvelle période de validité ;
par contre si le certificat d'authentification est expiré à l'étape de vérification, alors :
   - le serveur distant de renouvellement de certificat transmet à une base de données distante un identifiant du composant connecté associé à sa demande de renouvellement de certification,
   - l'identifiant du composant connecté et sa demande de renouvellement de certification sont contrôlés manuellement par un opérateur de contrôle ayant un accès à la base de données distante ;
   - le certificat d'authentification est renouvelé ou non pour la nouvelle période de validité par l'opérateur de contrôle en fonction de son contrôle manuel ;
le procédé mettant en œuvre, avant la phase de renouvellement, une phase de certification au cours de laquelle le composant connecté est physiquement relié à un serveur local, et ledit serveur local génère, signe, puis attribue le certificat d'authentification audit composant connecté.

Ainsi, l'invention résout la problématique exposée auparavant, en permettant de renouveler le certificat d'authentification d'un composant connecté que sa période de validité soit ou non dépassée ; lequel certificat d'authentification est utilisé par le composant connecté pour s'identifier auprès d'un serveur distant gestionnaire de mises à jour et télécharger des mises à jour. En vue du renouvellement de son certificat d'authentification, le composant connecté se connecte à un serveur distant de renouvellement de certificat et émet à celui-ci une demande de renouvellement de certification, lequel serveur distant de renouvellement de certificat vérifie ensuite si le certificat d'authentification est encore ou non valide.

Selon une possibilité, la phase de renouvellement peut comprendre une étape de sécurité au cours de laquelle le serveur distant de renouvellement de certificat vérifie un identifiant du composant connecté et/ou que le composant connecté possède le certificat d'authentification, avant l'étape de demande de renouvellement.

Autrement dit, préalablement à cette étape de demande de renouvellement, peut être mise en œuvre une étape de sécurité pour éviter toute tentative d'accès d'une entité malveillante durant laquelle le serveur distant de renouvellement de certificat :
- contrôle un identifiant du composant connecté, en vérifiant par exemple s'il est inclus dans une liste d'identifiant de composants connectés devant être connus du dit serveur distant de renouvellement de certificat. Ainsi, un composant connecté qui possède un certificat d'authentification mais dont l'identifiant est inconnu dudit serveur distant de renouvellement de certificat ne peut pas émettre de requête de renouvellement du certificat d'authentification, ou continuer de communiquer de manière plus générale avec le serveur distant de renouvellement de certificat. En effet, le composant connecté peut potentiellement être malveillant et posséder un certificat d'authentification falsifié élaboré par des fraudeurs ayant pu avoir accès de manière illégale au format du certificat ; et/ou
- contrôle si le composant connecté possède ou non un certificat d'authentification. Ainsi, un composant connecté devant être connu du serveur distant de renouvellement de certificat mais ne possédant pas de certificat d'authentification ne peut émettre de demande de renouvellement de certification.

Dans le cas où la demande de renouvellement est faite par le composant connecté pour un certificat d'authentification toujours valide, le renouvellement est automatiquement réalisé par le serveur distant de renouvellement de certificat.

Dans le cas contraire, et comme indiqué plus haut, le serveur distant de renouvellement de certificat transmet à une base de données distante l'identifiant du composant connecté cherchant à faire renouveler son certificat d'authentification associé à sa demande de renouvellement, lesquels sont contrôlés par un opérateur de contrôle (une personne physique donc) ayant accès à la base de données distante. Ainsi, dans ce contexte, le renouvellement de certification est réalisé manuellement par l'opérateur de contrôle.

Afin que le renouvellement de certification manuel soit réalisé rapidement, il est envisageable que le serveur distant de renouvellement de certificat alerte l'opérateur de contrôle, par exemple par l'envoi d'un courrier électronique automatique à l'adresse électronique de l'opérateur de contrôle simultanément à la transmission dans la base de données distante de l'identifiant du composant connecté et de sa demande de renouvellement de certification.

Dans une variante de réalisation de l'invention, la demande de renouvellement de certification ne peut pas être réalisée avant d'avoir atteint une période de renouvellement prédéfinie qui se situe à la fin de la période de validité. Autrement dit, si le composant connecté se connecte au serveur distant de renouvellement de certificat et émet sa demande de renouvellement de certification trop tôt, donc avant le début de la période de renouvellement, le renouvellement de certification n'est pas accepté.

Si le renouvellement de certification est effectué à distance, la génération, l'attribution et la signature d'un certificat d'authentification se font en local, au moyen du serveur local installé par exemple dans une usine de production. Ainsi, le serveur local fait office d'autorité de certification. Plus précisément, les certificats d'authentification sont générés, signés, et attribués aux composants connectés après fabrication et une fois programmés pour réaliser les tâches auxquelles ils sont destinés. Afin de recevoir leur certificat d'authentification, les composants connectés sont raccordés physiquement au serveur local, par exemple au moyen d'un câble Ethernet.

Avantageusement, l'emploi d'un serveur local permet de limiter les risques d'intrusion malveillante à distance et la fuite des données, qu'elles soient relatives : à la programmation et au fonctionnement des composants connectés ; ou aux certificats. La génération et l'attribution en local des certificats d'authentification permet par extension de réduire le risque de tentative d'intrusion sur le serveur distant de renouvellement de certificat.

Selon une caractéristique de l'invention, le certificat d'authentification contient un identifiant du serveur local.

Autrement dit, si le procédé s'appuie sur plusieurs serveurs locaux, chaque serveur local génèrera des certificats d'authentification dans lesquels sera contenu son identifiant (aussi appelé identifiant de serveur). Avantageusement, cela permet à un opérateur de contrôle de pouvoir tracer et identifier facilement et rapidement tous les certificats qui ont pu être générés et attribués par un serveur local/une autorité de certification donné(e).

Dans une autre variante de réalisation de l'invention, c'est le format des certifications d'authentification qui permet de déterminer le ou les serveurs locaux les ayant générés.

Selon une caractéristique de l'invention, avant d'accéder au serveur distant gestionnaire de mises à jour, le composant connecté est connecté à un serveur distant de provisionnement qui contient une liste d'identifiants de plusieurs serveurs locaux autorisés pour générer et signer des certificats d'authentification ; et dans lequel ledit serveur distant de provisionnement contrôle la validité du certificat d'authentification du composant connecté avant de lui donner accès au serveur distant gestionnaire de mises à jour.

Avantageusement, le serveur distant de provisionnement permet de renforcer la sécurité pour l'accès au serveur distant gestionnaire de mises à jour, et ainsi minimiser les risques d'intrusion d'une entité malveillante, en contrôlant si le certificat d'authentification que possède le composant connecté souhaitant se connecter au serveur distant gestionnaire de mises à jour contient un identifiant compris dans une liste d'identifiants de plusieurs serveurs locaux autorisés/connus.

Dans une variante de réalisation de l'invention, le serveur distant de renouvellement de certificat contrôle, durant l'étape de sécurité pour la demande de renouvellement de certification, si le certificat d'authentification que possède le composant connecté contient l'identifiant du serveur local l'ayant délivré, et similairement au service distant de provisionnement, si l'identifiant est contenu de la liste des identifiants de plusieurs serveurs locaux autorisés (signifiant donc que les deux serveurs se partagent la même liste). En fonction du résultat de ce contrôle, le composant connecté peut ou non émettre une demande de renouvellement de certification.

Selon une caractéristique de l'invention, le contrôle de la validité du certificat d'authentification du composant connecté par le serveur distant de provisionnement comprend un contrôle de l'identifiant du serveur local contenu dans le certificat d'authentification, et si ledit serveur local est classé comme un serveur révoqué, alors le serveur distant de provisionnement interdit l'accès au serveur distant gestionnaire de mises à jour pour ledit composant connecté.

Autrement dit, la génération d'un certificat d'authentification comprenant l'identifiant de l'autorité de certification (ici le serveur local) l'ayant généré permet avantageusement au serveur de distant de provisionnement de facilement et rapidement révoquer tous les certificats d'authentification générés par un ou plusieurs serveurs locaux particuliers sans révoquer ceux générés et attribués par les autres. Ces révocations peuvent avoir par exemple pour origine une observation par des opérateurs sur ces serveurs locaux particuliers, de fuites de données. Il n'est alors plus possible pour les composants connectés dont le certificat d'authentification a été révoqué d'accéder aux services du serveur distant gestionnaire de mises à jour.

Dans un mode de réalisation de l'invention, l'opérateur a la possibilité d'annuler la révocation d'un serveur local révoqué. Suite à cette annulation de révocation, les certificats d'authentification produits par ce serveur local redeviennent valides. Dans le cas où la révocation d'un certificat d'authentification aurait eu lieu avant que le composant connecté puisse télécharger une mise à jour à partir du serveur distant gestionnaire de mises à jour, et que l'annulation de révocation soit effectuée après expiration de la période de validité du certificat d'authentification, alors le composant connecté doit faire renouveler ce dernier suivant les étapes du procédé précédemment décrites (in fine, le renouvellement de certification sera donc effectué manuellement par l'opérateur de contrôle).

Selon un mode de réalisation de l'invention, le composant connecté est un composant d'un engin de chantier, par exemple une grue.

Selon un mode de réalisation de l'invention, le serveur de renouvellement de certificat, la base de données distante, le service distant de provisionnement, et le système distant gestionnaire de mises à jour sont compris dans une infrastructure informatique distante.

Selon un mode de réalisation de l'invention, l'infrastructure distante est une infrastructure en nuage, c'est-à-dire des infrastructures « cloud ».

### [Brève description des figures]

D'autres caractéristiques et avantages de la présente invention apparaîtront à la lecture de la description détaillée ci-après, d'un exemple de mise en œuvre non limitatif, faite en référence aux figures annexées dans lesquelles :

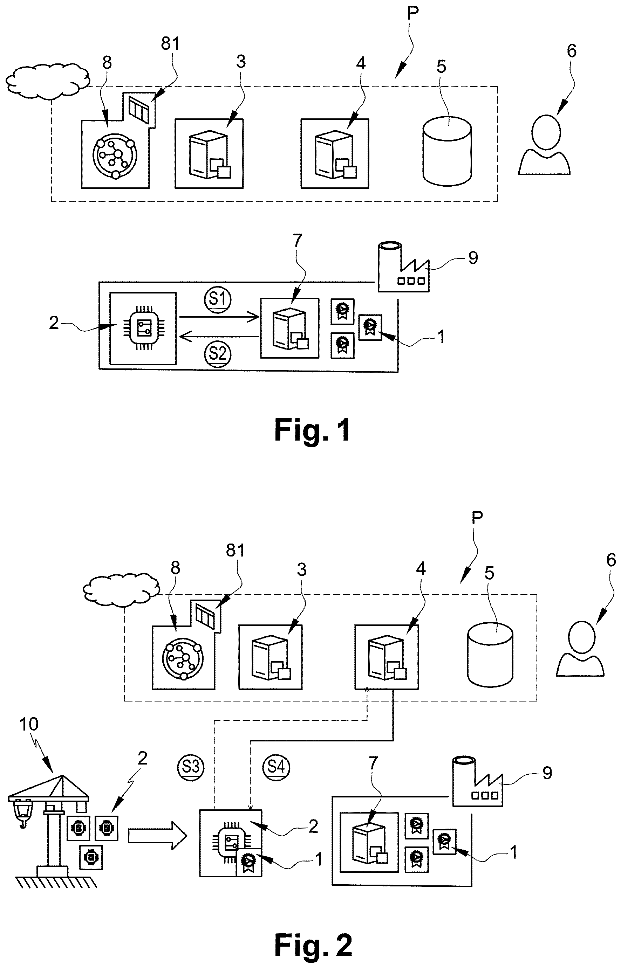

[Fig 1] est une vue schématique montrant l'ensemble des entités intervenant dans la mise en œuvre du procédé, et des étapes mises en œuvre durant la phase de certification durant laquelle le composant connecté est raccordé physiquement à une autorité de certification, qui est un serveur local, pour recevoir un certification d'authentification signé et valide durant toute la période de validité ;
[Fig 2] est une vue schématique du procédé similaire à celle de la Figure 1, dans laquelle sont illustrées des étapes mises en œuvre lors de la phase de renouvellement du certificat d'authentification, lorsque le composant connecté se connecte au serveur distant de renouvellement de certificat, et dans le cas où la période de validité n'est pas terminée.

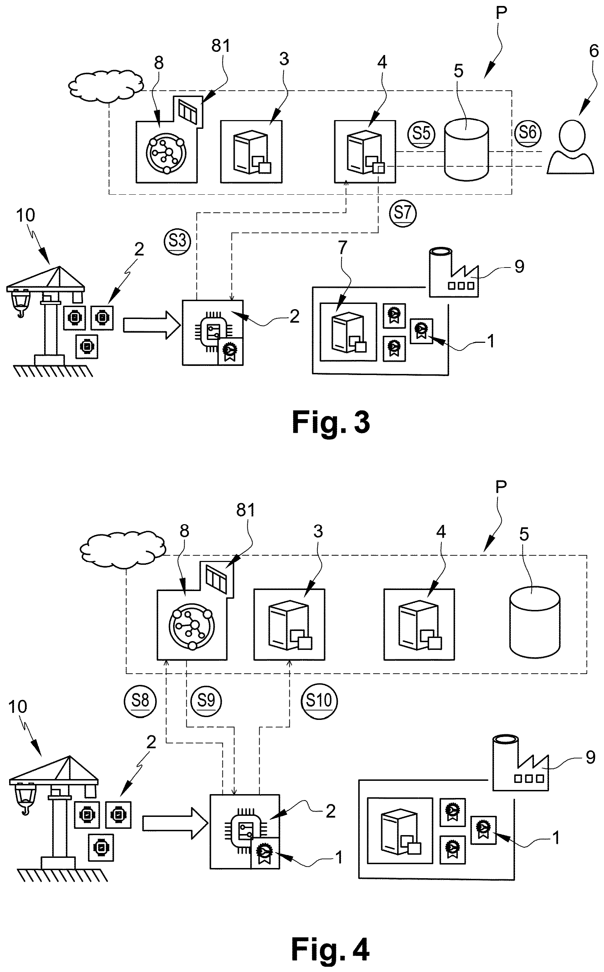

[Fig 3] est une vue schématique du procédé similaire à celles des Figure 1 et Figure 2, dans laquelle sont illustrées des étapes mises en œuvre lors de la phase de renouvellement du certificat d'authentification, lorsque le composant connecté se connecte au serveur distant de renouvellement de certificat, et dans le cas où la période de validité du certificat d'authenticité a expiré.
[Fig 4] est une vue schématique du procédé similaire à celles des Figure 1 à Figure 3, dans laquelle sont illustrées des étapes mises en œuvre lorsque le composant connecté veut se connecter au serveur distant gestionnaire de mises à jour pour télécharger des mises à jour.

### [Description détaillée d'un ou plusieurs modes de réalisation de l'invention]

Le procédé P proposé permet de renouveler les certificats d'authentification 1 de composants connectés 2, que leur période de validité soit ou non dépassée.

Dans le mode de réalisation de l'invention présenté, les composants connectés 2 sont des composants connectés d'un engin de chantier, par exemple une grue 10, utilisant chacun un certificat d'authentification 1 pour s'authentifier auprès d'un serveur distant gestionnaire de mises à jour 3 afin de télécharger des mises à jour relatives, par exemple, à de nouvelles fonctionnalités.

Préalablement à la phase de renouvellement, le procédé P met en œuvre une phase de certification au cours de laquelle le composant connecté 2 se connecte à une autorité de certification qui va générer, signer et délivrer au composant connecté 2 son certificat d'authentification 1.

Alors que la phase de renouvellement est réalisée avec le composant connecté 2 se connectant à une infrastructure informatique distante, qui est un serveur distant de renouvellement de certificat 4, la phase de certification est quant à elle mise en œuvre localement. En référence à la Figure 1, il peut s'agir d'un serveur local 7 installé dans une usine de production 9 dans laquelle les composants connectés sont fabriqués puis programmés pour assurer leurs fonctions. Au cours d'une étape de connexion S1, le composant connecté 2, une fois fabriqué et programmé, est raccordé physiquement (au moyen d'un câble Ethernet par exemple) et communique avec le serveur local 7, lequel génère, signe, et transmet au cours d'une étape de transmission S2 au composant connecté 2, le certificat d'authentification 1 qui possède une période de validité.

Comme expliqué antérieurement, l'emploi d'un serveur local 7 permet de limiter les risques d'intrusion malveillante à distance et la fuite des données, qu'elles soient relatives : à la programmation et au fonctionnement des composants connectés 2 ; et/ou aux certificats d'authentification. Par extension, la génération et l'attribution en local des certificats d'authentification 1 permet de réduire le risque de tentative d'intrusion sur le serveur distant de renouvellement de certificat 4 et/ou le serveur distant gestionnaire de mises à jour 3.

Dans une première variante de réalisation de l'invention, les certificats d'authentification 1 générés par un serveur local 7 contiennent son identifiant de serveur. Grâce à celui-ci, une personne physique et/ou une infrastructure informatique peut tracer facilement et rapidement tous les composants connectés possédant un certificat d'authentification généré et signé par ce serveur local 7.

Dans une seconde variante de réalisation de l'invention, la distinction entre des certificats d'authentification 1 qui sont générés par des serveurs locaux 7 différents repose sur leur format. Autrement dit, chaque serveur local 7 produit des certificats d'authentification 1 selon un format donné.

Dans une troisième variante de réalisation, tous les certificats d'authentification 1 sont générés selon le même format. Par contre, l'agencement et/ou la nature des données contenues dans le certificat d'authentification 1 (comme la date d'expiration du certificat, la signature du serveur local, la clé publique pour le chiffrement des données, etc.) peuvent différer selon le serveur local 7 l'ayant généré.

Le composant connecté est programmé, suite à une mise sous tension, pour se connecter au serveur distant gestionnaire de mises à jour 3 pour télécharger des mises à jour, et au serveur distant de renouvellement de certificat 4 afin de faire renouveler son certificat d'authentification 1.

Etant donné qu'un renouvellement du certificat d'authentification 1 à une date/période relativement proche de sa génération serait peu utile, la demande de renouvellement de certification dans un mode de réalisation de l'invention ne peut pas être se faire avant que soit atteinte une période de renouvellement prédéfinie, laquelle est de la date d'expiration du certificat d'authentification 1. Par exemple, si la période de validité du certificat d'authentification est d'un an, la période de renouvellement peut correspondre au dernier mois de la période de validité (soit le douzième mois).

Autrement dit, si le composant connecté se connecte au serveur distant de renouvellement de certificat 4 et émet sa demande de renouvellement de certification trop tôt, donc avant le début de la période de renouvellement, le renouvellement de certification n'est pas réalisé.

Dans un mode de réalisation de l'invention, le composant connecté 2 est programmé pour déterminer s'il est mis sous tension quand la date de début de la période de renouvellement est dépassée, puis si c'est le cas pour se connecter automatiquement au serveur distant de renouvellement de certificat 4.

En référence à la Figure 2, le composant connecté 2 se connecte durant une étape de connexion S3 au serveur distant de renouvellement de certificat 4.

Dans un mode de réalisation de l'invention, il est envisageable que soit mise en œuvre après connexion du composant connecté 2 une étape de sécurité pour éviter toute tentative d'accès d'une entité malveillante, au cours de laquelle le serveur distant de renouvellement de certificat 4 vérifie :
- si le composant connecté 2 est bien détenteur d'un certificat d'authentification 1, faisant qu'autrement, il ne peut émettre de demande de renouvellement ; et
- l'authenticité dudit certificat d'authentification 1.

Dans différentes variantes de réalisation de l'invention, le serveur distant de renouvellement de certificat 4 peut vérifier : si le certificat d'authentification 1 contient l'identifiant du serveur local 7 l'ayant généré, et si cet identifiant est connu ou non ; et/ou le format du certificat d'authentification 1 ; et/ou l'agencement et/ou la nature des données comprises dans le certificat d'authentification 1.

Il est également envisageable que le serveur distant de renouvellement de certificat 4 puisse également contrôler une référence/un identifiant du composant connecté 2, en la comparant par exemple avec une liste recensant l'ensemble des références de tous les composants connectés appartenant à l'entité (par exemple un constructeur de grue 10) mettant en œuvre le procédé P. Ainsi, un composant connecté 2 qui possède un certificat d'authentification 1 mais dont la référence est inconnue du serveur distant de renouvellement de certificat 4 ne peut pas émettre de demande de renouvellement.

Suite à l'étape de connexion S3, et éventuellement à l'étape de sécurité optionnelle, le composant connecté 2 émet sa demande de renouvellement de certification pour une nouvelle période de validité (pouvant être de même durée ou de durée différente que la période de validité initiale selon différents modes de réalisation).

Le serveur distant de renouvellement de certificat 4 vérifie alors au cours d'une étape de vérification si le certificat d'authentification 1 du composant connecté est encore valide ou non, c'est-à-dire si la période de validité n'est pas arrivée à date d'expiration. Comme expliqué antérieurement, un composant connecté 2 d'une grue 10 peut ne pas être utilisé et alimenté durant de longues périodes (parfois plusieurs mois) s'il ne répond pas aux besoins d'avancement d'un chantier de construction en cours. Si le composant connecté 2 est remis sous tension après dépassement de la date de début de la période de renouvellement, celui-ci va se connecter au serveur distant de renouvellement de certificat 4, que la période de validité du certificat d'authentification 1 soit ou pas arrivée à terme.

Dans le cas où la demande de renouvellement de certification est faîte durant la période de renouvellement, le serveur distant de renouvellement de certificat 4 renouvelle automatiquement le certificat d'authentification 1 durant une étape de renouvellement automatique S4 (Figure 2).

Si la demande de renouvellement de certification est faîte après expiration de la période de validité, en référence à la Figure 3, le serveur distant de renouvellement de certificat 4 la transmet durant une étape de transmission S5 à une base de données distante 5. Il transmet aussi à la base de données distante 5 une référence/un identifiant du composant connecté 2.

Suite à cette étape de transmission S5, un opérateur de contrôle 6 ayant accès à la base de données distante 5 contrôle, durant une étape de contrôle S6 l'identifiant du composant connecté 2 et sa demande de renouvellement de certification. L'opérateur de contrôle 6 est une personne physique.

Si l'identifiant du composant connecté 2 est connu et que la demande de renouvellement de certification est valide, l'opérateur de contrôle 6 renouvelle manuellement la période de validité du certificat d'authentification 1 durant une étape de renouvellement manuel S7. Dans un premier mode de réalisation de l'invention, le renouvellement manuel est opéré à partir de la base de données distante 5, et le serveur distant de renouvellement, en communication avec celle-ci, prend connaissance dudit renouvellement manuel. Dans un second mode de réalisation de l'invention, l'opérateur de contrôle 6 se connecte directement au serveur distant de renouvellement de certificat 4 pour procéder au renouvellement manuel.

Afin que le renouvellement de certification manuel soit réalisé rapidement, il est envisageable que le serveur distant de renouvellement de certificat 4 alerte l'opérateur de contrôle 6, par exemple par l'envoi d'un courrier électronique automatique à l'adresse électronique de l'opérateur de contrôle 6 simultanément à la transmission de l'identifiant du composant connecté 2 et de sa demande de renouvellement de certification dans la base de données distante 5.

Lorsqu'il possède un certificat d'authentification 1 valide, le composant connecté 2 peut, comme précédemment indiqué, se connecter au serveur distant gestionnaire de mises à jour 3.

En référence à la Figure 4, dans le mode de réalisation décrit, avant d'accéder au serveur distant gestionnaire de mises à jour 3, le composant connecté 2, durant une étape de connexion S8, se connecte à un serveur distant de provisionnement 8 qui contient une liste d'identifiants 81 de plusieurs serveurs locaux 7 autorisés pour générer et signer des certificats d'authentification 1.

Ainsi, le serveur distant de provisionnement 8 permet de renforcer la sécurité pour l'accès au serveur distant gestionnaire de mises à jour 3, et ainsi minimiser les risques d'intrusion d'une entité malveillante, en contrôlant si le certificat d'authentification 1 que possède le composant connecté 2 souhaitant se connecter au serveur distant gestionnaire de mises à jour 3 contient un identifiant de serveur local 7 compris ou non dans la liste d'identifiants 81.

A noter que cette liste d'identifiants 81 peut également être exploitée par le serveur distant de renouvellement de certificat 4 dans le mode de réalisation où est mis en œuvre l'étape de sécurité et que le contrôle de l'authenticité du certification d'authentification repose sur un contrôle de l'identifiant du serveur local 7 l'ayant généré et délivré.

Le serveur distant de provisionnement 8, s'il reconnaît l'identifiant du serveur local 7, autorise le composant connecté 2 à se connecter au serveur distant gestionnaire de mises à jour 3 durant une étape de confirmation d'autorisation de connexion S9.

Le composant connecté 2 peut alors durant une étape de connexion S10 se connecter au serveur distant gestionnaire de mises à jour 3.

En cas d'intrusion malveillante et/ou de fuite de données touchant directement ou indirectement un serveur local 7, le serveur de provisionnement 8 a la capacité de révoquer tous les certificats d'authentification 1 générés et signés par celui-ci sans impacter ceux générés par un ou plusieurs autres serveurs locaux 7. Cela signifie également que le serveur de provisionnement 8 peut également procéder à des révocations de masse si plusieurs serveurs locaux sont impactés 7 par des attaques.

Les composants connectés 2 possédant un certificat d'authentification 1 révoqué ne peuvent plus accéder ni aux services du serveur distant gestionnaire de mises à jour 3, ni au serveur distant de renouvellement de certificat 4 pour un renouvellement de certificat d'authentification.

Il est prévu que la révocation d'un serveur local 7 puisse être annulée par un opérateur de contrôle 6. Suite à cette annulation, les certificats d'authentification 1 produits par ce serveur local 7 redeviennent alors valides. Dans le cas où l'annulation de révocation a lieu après expiration de la période de validité d'un certificat d'authentification 1, le composant connecté 2 le possédant se connecte au serveur distant de renouvellement de certificat 4 et attend qu'il soit 1 renouvelé manuellement.

En référence aux Figure 1 à Figure 4, dans les modes de réalisation présentés, le serveur de renouvellement de certificat 4, la base de données distante 5, le service distant de provisionnement 8, et le système distant gestionnaire de mises à jour 3 sont tous des infrastructures en nuage (c'est-à-dire des infrastructures cloud).

## Revendications

1. Procédé (P) pour une gestion d'un renouvellement d'un certificat d'authentification (1) attribué de manière unique à un composant connecté (2), dans lequel ledit certificat d'authentification (1) est valide pendant une période de validité jusqu'à une date d'expiration et est expiré au-delà de la date d'expiration, ledit certificat d'authentification (1) servant comme moyen d'authentification du composant connecté (2) auprès d'un serveur distant gestionnaire de mises à jour (3) tant que ledit certificat d'authentification (1) est valide, le procédé (P) mettant en œuvre une phase de renouvellement comprenant au moins les étapes successives suivantes :
- une étape de connexion (S3) à distance au cours de laquelle le composant connecté (2) se connecte à un serveur distant de renouvellement de certificat (4),
- une étape de demande de renouvellement au cours de laquelle le composant connecté (2) émet une demande de renouvellement de certification au serveur distant de renouvellement de certificat (4) pour une nouvelle période de validité,
- une étape de vérification au cours de laquelle le serveur distant de renouvellement de certificat (4) vérifie si le certificat d'authentification (1) est valide ou expiré ;
et dans laquelle si le certificat d'authentification (1) est valide à l'étape de vérification, alors le serveur distant de renouvellement de certificat (4) renouvelle automatiquement le certificat d'authentification (1) pour la nouvelle période de validité ;
par contre si le certificat d'authentification (1) est expiré à l'étape de vérification, alors :
- le serveur distant de renouvellement de certificat (4) transmet à une base de données distante (5) un identifiant du composant connecté (2) associé à sa demande de renouvellement de certification,
- l'identifiant du composant connecté (2) et sa demande de renouvellement de certification sont contrôlés manuellement par un opérateur de contrôle (6) ayant un accès à la base de données distante (5) ;
- le certificat d'authentification (1) est renouvelé ou non pour la nouvelle période de validité par l'opérateur de contrôle (6) en fonction de son contrôle manuel ;
le procédé (P) mettant en œuvre, avant la phase de renouvellement, une phase de certification au cours de laquelle le composant connecté (2) est physiquement relié à un serveur local (7), et ledit serveur local (7) génère, signe, puis attribue le certificat d'authentification (1) audit composant connecté (2).

2. Procédé (P) selon la revendication 1, dans lequel le certificat d'authentification (2) contient un identifiant du serveur local (7).

3. Procédé (P) selon la revendication 2, dans lequel, avant d'accéder au serveur distant gestionnaire de mises à jour (4), le composant connecté (2) est connecté à un serveur distant de provisionnement (8) qui contient une liste d'identifiants (81) de plusieurs serveurs locaux (7) autorisés pour générer et signer des certificats d'authentification (1) ; et dans lequel ledit serveur distant de provisionnement (8) contrôle la validité du certificat d'authentification (1) du composant connecté (2) avant de lui donner accès au serveur distant gestionnaire de mises à jour (3).

4. Procédé (P) selon la revendication 3, dans laquelle le contrôle de la validité du certificat d'authentification (1) du composant connecté (2) par le serveur distant de provisionnement (8) comprend un contrôle de l'identifiant du serveur local (7) contenu dans le certificat d'authentification (1), et si ledit serveur local (7) est classé comme un serveur révoqué, alors le serveur distant de provisionnement (8) interdit l'accès au serveur distant gestionnaire de mises à jour (3) pour ledit composant connecté (2).

5. Procédé (P) selon l'une quelconque des revendications précédentes, dans lequel le composant connecté (2) est un composant d'un engin de chantier, par exemple une grue (10).

## Patentansprüche

1. Verfahren (P) zum Verwalten einer Erneuerung eines Authentifizierungszertifikats (1), das eindeutig einer verbundenen Komponente (2) zugewiesen ist, wobei das Authentifizierungszertifikat (1) für einen Gültigkeitszeitraum bis zu einem Ablaufdatum gültig ist und nach dem Ablaufdatum abläuft, wobei das Authentifizierungszertifikat (1) als Authentifizierungsmittel der verbundenen Komponente (2) bei einem Remote-Update-Verwaltungsserver (3) dient, solange das Authentifizierungszertifikat (1) gültig ist, wobei das Verfahren (P) eine Erneuerungsphase durchführt, die mindestens die folgenden aufeinanderfolgenden Schritte umfasst:
- einen Fernverbindungsschritt (S3), bei dem sich die verbundene Komponente (2) mit einem entfernten Zertifikatserneuerungsserver (4) verbindet,
- einen Schritt zur Erneuerungsanfrage, bei dem die verbundene Komponente (2) eine Anforderung zur Erneuerung der Zertifizierung an den entfernten Zertifikatserneuerungsserver (4) für einen neuen Gültigkeitszeitraum sendet,
- einen Verifizierungsschritt, bei dem der entfernte Zertifikatserneuerungsserver (4) verifiziert, ob das Authentifizierungszertifikat (1) gültig oder abgelaufen ist;
und wobei, wenn das Authentifizierungszertifikat (1) im Verifizierungsschritt gültig ist, dann der entfernte Zertifikatserneuerungsserver (4) das Authentifizierungszertifikat (1) automatisch für den neuen Gültigkeitszeitraum erneuert;
wenn hingegen das Authentifizierungszertifikat (1) im Verifizierungsschritt abgelaufen ist, dann:
- der entfernte Zertifikatserneuerungsserver (4) einer entfernten Datenbank (5) eine Kennung der verbundenen Komponente (2) übermittelt, die mit ihrer Anforderung zur Zertifizierungserneuerung verbunden ist,
- die Kennung der verbundenen Komponente (2) und ihre Anforderung zur Erneuerung der Zertifizierung werden manuell von einem Kontrollbediener (6) mit Zugriff auf die entfernte Datenbank (5) überprüft;
- das Authentifizierungszertifikat (1) vom Kontrollbediener (6) je nach manueller Überprüfung für den neuen Gültigkeitszeitraum erneuert wird oder nicht;
Verfahren (P), das vor der Erneuerungsphase eine Zertifizierungsphase durchführt, in der die verbundene Komponente (2) physisch mit einem lokalen Server (7) verbunden ist, und der lokale Server (7) das Authentifizierungszertifikat (1) generiert, unterzeichnet und dann dieser verbundenen Komponente (2) zuweist.

2. Verfahren (P) nach Anspruch 1, wobei das Authentifizierungszertifikat (2) eine Kennung des lokalen Servers (7) enthält.

3. Verfahren (P) nach Anspruch 2, wobei die verbundene Komponente (2) vor dem Zugriff auf den Remote-Update-Verwaltungsserver (4) mit einem Remote-Bereitstellungsserver (8) verbunden ist, der eine Liste von Kennungen (81) mehrerer lokaler Server (7) enthält, die berechtigt sind, Authentifizierungszertifikate (1) zu generieren und zu signieren; und wobei der Remote-Bereitstellungsserver (8) die Gültigkeit des Authentifizierungszertifikats (1) der verbundenen Komponente (2) überprüft, bevor er ihm Zugriff auf den Remote-Update-Verwaltungsserver (3) gewährt.

4. Verfahren (P) nach Anspruch 3, wobei die Überprüfung der Gültigkeit des Authentifizierungszertifikats (1) der verbundenen Komponente (2) durch den Remote-Bereitstellungsserver (8) eine Überprüfung der in dem Authentifizierungszertifikat (1) enthaltenen Kennung des lokalen Servers (7) umfasst, und wenn der lokale Server (7) als widerrufener Server klassifiziert ist, dann verhindert der Remote-Bereitstellungsserver (8) den Zugriff auf den Remote-Update-Verwaltungsserver (3) für die verbundene Komponente (2).

5. Verfahren (P) nach einem der vorhergehenden Ansprüche, wobei die verbundene Komponente (2) eine Komponente einer Baumaschine, beispielsweise eines Krans (10), ist.

## Claims

1. A method (P) for managing a renewal of an authentication certificate (1) uniquely assigned to a connected component (2), in which said authentication certificate (1) is valid for a validity period until an expiration date and is expired beyond the expiration date, said authentication certificate (1) serving as a means of authenticating the connected component (2) to a remote update manager server (3) as long as said authentication certificate (1) is valid, the method (P) implementing a renewal phase comprising at least the following successive steps:
- a remote connection step (S3) during which the connected component (2) is connected to a remote certificate renewal server (4),
- a renewal request step during which the connected component (2) issues a certification renewal request to the remote certificate renewal server (4) for a new validity period,
- a checking step during which the remote certificate renewal server (4) checks whether the authentication certificate (1) is valid or expired;
and wherein if the authentication certificate (1) is valid at the checking step, then the remote certificate renewal server (4) automatically renews the authentication certificate (1) for the new validity period;
otherwise, if the authentication certificate (1) has expired at the checking step, then:
- the remote certificate renewal server (4) transmits to a remote database (5) an identifier of the connected component (2) associated with its certification renewal request,
- the identifier of the connected component (2) and its certification renewal request are manually controlled by a control operator (6) having access to the remote database (5);
- the authentication certificate (1) is renewed or not for the new validity period by the control operator (6) depending on its manual control;
the method (P) implementing, before the renewal phase, a certification phase during which the connected component (2) is physically connected to a local server (7), and said local server (7) generates, signs, then assigns the authentication certificate (1) to said connected component (2).

2. The method (P) according to claim 1, wherein the authentication certificate (2) contains an identifier of the local server (7).

3. The method (P) according to claim 2, wherein, before accessing the remote update manager server (4), the connected component (2) is connected to a remote provisioning server (8) which contains a list of identifiers (81) of several local servers (7) authorized to generate and sign authentication certificates (1); and in which said remote provisioning server (8) controls the validity of the authentication certificate (1) of the connected component (2) before giving it access to the remote update manager server (3).

4. The method (P) according to claim 3, wherein the control of the validity of the authentication certificate (1) of the connected component (2) by the remote provisioning server (8) comprises a control of the identifier of the local server (7) contained in the authentication certificate (1), and if said local server (7) is classified as a revoked server, then the remote provisioning server (8) prohibits access to the remote update manager server (3) for said connected component (2).

5. The method (P) according to any one of the preceding claims, wherein the connected component (2) is a component of a construction machine, for example a crane (10).
